# EUROPÄISCHE PATENTSCHRIFT

(11) **EP 0 670 235 B1**
(45) Veröffentlichungstag und Bekanntmachung des Hinweises auf die Patenterteilung: **06.08.1997**
(21) Anmeldenummer: 95102723.4
(22) Anmeldetag: 25.02.1995
(51) Int. Cl.: B60K 26/02

(54) **Fahrpedaleinrichtung**
Accelerator pedal installation
Installation avec pédale d'accélération

(30) Priorität: 03.03.1994 DE 4407005
(43) Veröffentlichungstag der Anmeldung: 06.09.1995
(73) Patentinhaber: Hella KG Hueck & Co., 59552 Lippstadt (DE)
(72) Erfinder: Berglar, Heinrich, D-59510 Lippetal (DE)

(56) Entgegenhaltungen:
- DE-A- 4 203 367

## Beschreibung

Die Erfindung betrifft eine Fahrpedaleinrichtung zum Einstellen der Fahrgeschwindigkeit eines Fahrzeuges, mit einer Fahrpedalplatte, mit mindestens einer Feder, die eine Rückstellkraft auf die Fahrpedalplatte ausübt, mit zumindest einem Drehsensor der ein von der Betätigung der Fahrpedalplatte abhängiges Signal erzeugt, wobei der Drehsensor die Positionierung eines drehbaren Elementes bestimmt und einer Einrichtung zur Erzeugung einer Krafthysterese bei Betätigung der Fahrpedalplatte.

Die vom Fahrer gewünschte Fahrzeuggeschwindigkeit wird dem Fahrzeug zumeist über ein Fahrpedal vorgegeben. Besonders bei modernen Kraftfahrzeugen erfolgt dabei die Übertragung der jeweiligen Fahrpedaleinstellung an den Fahrzeugmotor statt mechanisch (z. B. über einen Seilzug) zunehmend auf elektrischem Wege.

An die mit elektrischen Gebern ausgerüsteten Fahrpedaleinrichtungen werden dabei hinsichtlich Bedienungskomfort und Sicherheit ähnliche Anforderungen gestellt, wie sie von mechanisch wirkenden Einrichtungen bekannt sind.

So soll eine auf das Fahrpedal wirkende Rückstellkraft eine möglichst gefühlvolle Einstellung der Fahrgeschwindigkeit erlauben. Weiterhin ist eine Krafthysterese erwünscht, um einerseits den subjektiven Eindruck der Betätigung des Fahrpedals dem Eindruck der Betätigung eines Fahrpedals unter allgemein üblicher Kraftübertragung über zum Beispiel einen Seilzug auf eine federbelastete Drosselklappe ähnlich zu machen. Andererseits soll so eine Störung der Verstelleinrichtung durch geringfügige äußere Einflüsse wie z. B. kurzzeitiges Verringern des Fahrpedaldruckes durch Überfahren einer Fahrbahnunebenheit vermieden werden.

Aus der PCT-Anmeldung WO 91/04165 ist eine Fahrpedaleinrichtung gemäß des Oberbegriffs des Anspruches 1 bekannt, bei der eine mit dem Fahrpedalgestänge verbundene Welle einen Drehsensor betätigt, wobei die Rückstellkraft für diese Welle durch mindestens eine Torsionsschenkelfeder erzeugt wird.

Die Krafthysterese wird durch Friktionselemente erzeugt, die vorgespannt durch eine weitere Feder, bremsbackenartig auf einer mit der Welle verbundenen Scheibe drücken.

Die beschriebene Fahrpedaleinrichtung ist konstruktiv recht aufwendig und ist aus einer relativ großen Anzahl von Einzelteilen zusammengefügt. Die Verwendung von Schenkelfedern in diesem Zusammenhang ist nachteilig, da beim Bruch der Schenkelfeder die durch sie vermittelte Rückstellkraft schlagartig wegfällt. Bricht daher die einzige (oder von mehreren die letzte) Schenkelfeder, so wird, bedingt durch die nun fehlende Rückstellkraft, durch die Fußbetätigung des Fahrers das Fahrpedal in die Vollgasstellung gebracht oder es verbleibt zumindest, gehalten durch die Friktionselemente, in der momentanen Position. Bis es dem Fahrer eventuell gelingt, das Fahrpedal mit dem Fuß in die Leerlaufstellung zu ziehen, können bereits fatale Folgen eingetreten sein.

Es stellte sich daher die Aufgabe, eine Fahrpedaleinrichtung zu schaffen, die besonders einfach aufgebaut und kostengünstig herstellbar ist und die in ihrer Funktion besonders sicher ist. Insbesondere soll sie besonders gute Not-Betriebseigenschaften aufweisen.

Diese Aufgabe wird erfindungsgemäß dadurch gelöst, daß die Feder als Schraubendruckfeder ausgebildet ist, daß zur Erzeugung der Krafthysterese ein Reibelement vorgesehen ist, daß durch die Schraubendruckfeder beaufschlagt ist, das ein drehbar gelagerter Hebel vorgesehen ist, der die Betätigungswelle des Drehsensors antreibt, daß der Hebel eine Ausnehmung aufweist, die eine abgeschrägte Innenfläche besitzt, an der eine keilförmige Außenfläche des Reibelements verschieblich anliegt, wobei die der keilförmigen Außenfläche gegenüberliegende Außenfläche des Reibelements an einer Gehäusewandung oder an einer auf einer Gehäusewandung aufgebrachten Reibfläche anliegt.

Ein Vorteil der erfindungsgemäßen Fahrpedaleinrichtung ist, daß dieser aus einer besonders geringen Anzahl von Teilen besteht und damit besonders kostengünstig herstellbar ist. Weiterhin wird dadurch auch eine besonders kleine Bauform möglich, so daß die erfindungsgemäße Fahrpedaleinrichtung auch bei engen Platzverhältnissen, z. B. im Fußraum eines Fahrzeuges, verwendet werden kann.

Besonders vorteilhaft bei der erfindungsgemäßen Fahrpedaleinrichtung ist, daß die Rückstellkraft für die Fahrpedalplatte durch eine oder mehrere Schraubendruckfedern erzeugt wird. Schraubendruckfedern haben durch eine hohe Vorspannung den Vorteil, daß sie selbst nach einem Bruch noch genügend Rückstellkraft besitzen, um den Hebel zum Beispiel in die Leerlaufstellung zu bewegen, so daß die Betriebssicherheit der Fahrpedaleinrichtung weiterhin gegeben ist. In diesem Zusammenhang kann die Rückstellkraft vorteilhaft auch durch zwei Schraubendruckfedern erzeugt werden, die insbesondere parallelachsig zueinander angeordnet sind. Durch diese Maßnahme wird eine Redundanz geschaffen, die einen besonders sicheren Betrieb der erfindungsgemäßen Fahrpedaleinrichtung sicherstellt.

Weiterhin ist vorteilhaft, daß zur Erzeugung der Krafthysterese keine weiteren Federn benötigt werden, da hier eine Kraftkomponente der Rückstellkraft die Reibungskraft erzeugt. Dies bringt zudem den Vorteil mit sich, daß, falls die Rückstellkraft z. B. durch einen Bruch der Rückstellfeder(n) reduziert wird, bei der erfindungsgemäßen Fahrpedaleinrichtung auch die erzeugte Krafthysterese in vorgegebener Art und Weise geringer wird, so daß es auch der gebrochenen Schraubendruckfeder(n) mit ihrer verminderten Rückstellkraft noch gelingt, den Hebel der Fahrpedaleinrichtung in die Leerlaufstellung zurückzudrücken.

Vorteilhaft ist auch, daß die Charakteristik der Krafthysterese durch die Formgebung des Reibelementes und der Ausnehmung des Hebels und insbesondere durch die Formgebung der Reibfläche in weiten Grenzen konstruktiv beeinflußbar ist. Weiterhin kann vorteilhafterweise die Höhe der Hysterese durch die Federkraft der verwendeten Rückstellfeder beeinflußt werden.

Es ist anzumerken, daß aus der DE 42 03 367 A1 bereits ein Soll-Wert-Geber für eine Fahrpedaleinrichtung bekannt ist, bei der Rückstellkraft und die Krafthysterese durch eine oder mehrere Schraubendruckfedern erzeugt wird. Der dort beschriebene Soll-Wert-Geber ist aber weitaus komplexer aufgebaut als die erfindungsgemäße Fahrpedaleinrichtung. Zudem eignet sich der in der DE 42 03 367 A1 beschriebene Soll-Wert-Geber lediglich zur Erfassung von linearen Bewegungen, während eine Fahrpedalplatte bei Betätigung üblicherweise eine Drehbewegung um einen Anlenkpunkt ausführt, so daß diese Drehbewegung bei dem vorbekannten Soll-Wert-Geber zunächst in eine lineare Bewegung umgeformt werden muß, was zusätzlichen konstruktiven Aufwand bedeutet.

Ein besonderer Vorteil der erfindungsgemäßen Fahrpedaleinrichtung ist darin zu sehen, daß sie als fertig vormontierbare Baugruppe ausgeführt werden kann, die auf besonders einfache Weise in ein Fahrzeug eingebaut werden kann. Zu diesem Zweck ist es auch vorteilhaft, die elektrischen Verbindungen zwischen der Fahrpedaleinrichtung und dem Fahrzeugmotor über einen in das Gehäuse der Fahrpedaleinrichtung eingebrachten Steckverbinder herzustellen.

Ebenfalls vorteilhaft ist, daß trotz des einfachen Aufbaues der Fahrpedaleinrichtung noch verschiedene Aufbauvarianten möglich sind, die eine einfache Anpassung der erfindungsgemäßen Fahrpedaleinrichtung an die Platzverhältnisse in verschiedenartigen Fahrzeugen ermöglichen.

Ein Ausführungsbeispiel einer erfindungsgemäßen Fahrpedaleinrichtung ist in der Zeichnung dargestellt und soll im folgenden anhand der Zeichnung näher erläutert werden:

Es zeigen
- Figur 1: eine Schnittzeichnung einer erfindungsgemäßen Fahrpedaleinrichtung,
- Figuren 2 und 3: mögliche Ausgestaltungen des Sensors in einer Schnittzeichnung und
- Figuren 4, 5, 6: verschiedene Bauformen einer erfindungsgemäßen Fahrpedaleinrichtung.

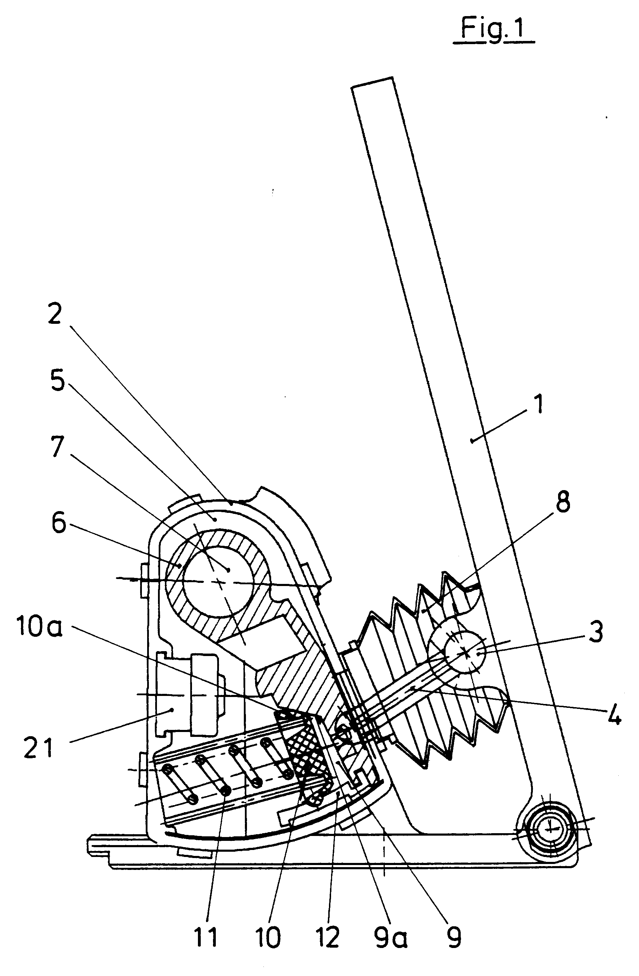

Figur 1 zeigt einen Schnitt durch eine erfindungsgemäße Fahrpedaleinrichtung. Diese besteht im wesentlichen aus einer Fahrpedalplatte (1), die beweglich an ein Gehäuse (2) angelenkt ist. Mit der Fahrpedalplatte (1) über ein Gelenk (3) verbunden ist eine Betätigungsstange (4), die wiederum bis in eine Kammer (5) des Gehäuses (2) geführt ist und dort über ein Kugelgelenk mit dem Hebel (6) verbunden ist. Das Gelenk (3), die Betätigungsstange (4) sowie die öffnung im Gehäuse (2), durch die die Betätigungsstange (4) geführt ist, werden durch einen Faltenbalg (8) vor Verschmutzung geschützt.

Der Hebel (6) steht in fester Verbindung mit einer Welle (7), die auch die Betätigungswelle des (in der Figur 1 nicht dargestellten) Drehsensors ausbildet oder zumindest an diese angekoppelt ist.

Der Hebel (6) besitzt in seinem dem Drehpunkt der Welle (7) gegenüberliegenden Abschnitt eine Ausnehmung (9), welcher wiederum eine abgeschrägte Innenfläche (9a) aufweist.

An dieser Innenfläche (9a) liegt eine keilförmig ausgebildete Außenfläche (10a) eines Reibelementes (10) verschieblich an, welches durch (mindestens) eine Schraubendruckfeder (11) in Richtung auf die Ausnehmung (9) des Hebels (6) gedrückt wird.

Die der keilförmigen Außenfläche (10a) entgegengesetzt liegende Fläche des Reibelementes (10) wirkt mit einer an einer Innenfläche des Gehäuses (2) aufgebrachten Reibfläche (12) zusammen.

Die so ausgestaltete Fahrpedaleinrichtung funktioniert folgendermaßen:

Betätigt der Fahrer die Fahrpedalplatte (1) in Richtung auf das Gehäuse (2), so überträgt die Betätigungsstange (4) die Bewegung der Fahrpedalplatte (1) auf den Hebel (6), wodurch dieser die mit ihm verbundene Welle (7) im Uhrzeigersinn dreht. Diese Drehbewegung der Welle (7) betätigt einen in der Figur 1 nicht dargestellten Drehsensor. Gleichzeitig wird die (mindestens eine) Schraubendruckfeder (11), welche die Rückstellkraft für Hebel (6) und Fahrpedalplatte (1) erzeugt, zusammengedrückt. Hierbei wirkt nun die Federkraft der mindestens einen Schraubendruckfeder (11) auf das Reibelement (10) in Richtung auf die Ausnehmung (9) des Hebels (6), wobei die keilförmige Außenfläche (10a) des Reibelementes (10) sich an der schrägen Innenfläche (9a) der Ausnehmung (9) entlangschiebt.

Hierdurch entsteht eine zur Drehbewegung des Hebels (6) radial gerichtete Kraft, mit der das Reibelement (10) auf die auf der Innenfläche des Gehäuses (2) aufgebrachte Reibfläche (12) gepreßt wird. Hierdurch wird auf einfache Weise und durch die gleichen konstruktiven Elemente bei Betätigung der Fahrpedalplatte sowohl die Rückstellkraft als auch die erwünschte Reibungskraft erzeugt. Durch geeignete Ausgestaltung der die Reibungskraft erzeugenden Bauteile (10, 11, 12) kann zudem auf einfache Weise eine Krafthysterese für die Reibungskraft vorgegeben werden.

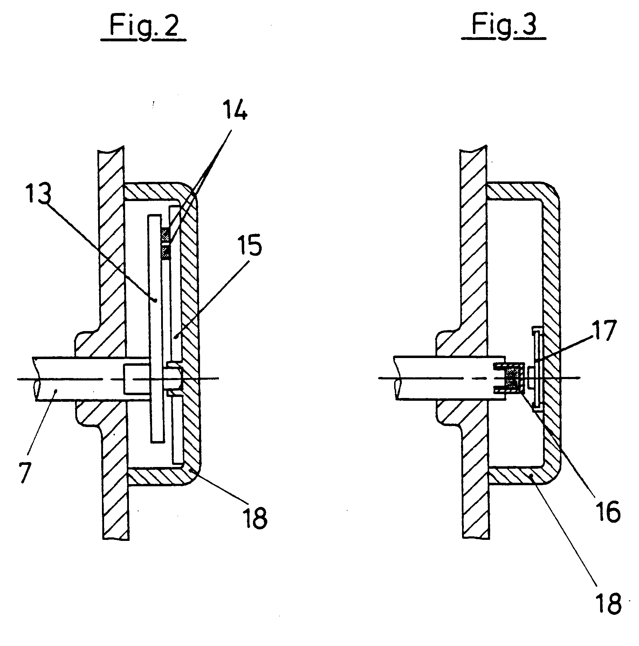

Die Figuren 2 und 3 zeigen beispielhaft zwei mögliche Ausgestaltungen der zur erfindungsgemäßen Fahrpedaleinrichtung gehörenden Drehsensoren.

In der Figur 2 ist der Drehsensor als Widerstandssensor ausgebildet. Auf der mit dem (hier nicht sichtbaren) Hebel verbundenen Welle (7) ist hier eine Platte (13) drehbar angeordnet, die mindestens einen, aus Redundanzgründen, aber vorzugsweise mehrere Schleifer (14) trägt.

Bei einer Drehung der Welle (7) werden die Schleifer entlang von Widerstandsbahnen geführt, welche auf einer mit dem Sensorgehäuse (18) verbundenen Widerstandsträgerplatte (15) aufgebracht sind.

Eine Ausführung des Drehsensors als berührungsloser Sensor zeigt die Figur 3. Hier ist an der Stirnfläche der Welle (7) ein Magnet (16) angebracht, dessen Orientierung durch einen magnetempfindlichen Sensor (17), welcher beispielsweise als magnetoresistiver Hybridbaustein ausgebildet sein kann, erfaßt wird.

Ein solcher berührungsloser Sensor ist in seiner Funktion besonders sicher, da er nicht während des Betriebes verschleißt.

Ein konstruktiver Unterschied zwischen den in den Figuren 2 und 3 dargestellten Ausführungsformen ist auch darin zu sehen, daß in der Figur 3 auf eine zusätzliche Lagerung der Welle (7) im Sensorgehäuse verzichtet wird. Die äußere Bauform des Sensorgehäuses (18) ist aber von der Art des verwendeten Sensors unabhängig.

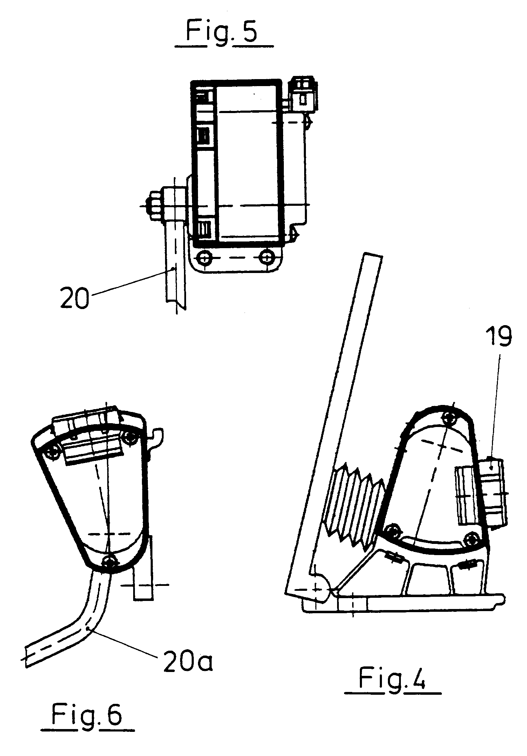

Die Figuren 4, 5, 6 zeigen verschiedene Bauformen einer erfindungsgemäßen Fahrpedaleinrichtung.

Figur 4 zeigt die bereits in Figur 1 dargestellte Grundform der erfindungsgemäßen Fahrpedaleinrichtung, die bereits fertig für den Einbau vormontiert ist. Zum Einbau ist die eingestellte Fahrpedaleinrichtung lediglich z. B. durch Verschrauben mit einer Fahrzeugkarosserie zu verbinden. Die elektrische Verbindung zwischen Fahrpedalsensor und der Fahrzeugelektrik oder -elektronik erfolgt auf einfache Weise über eine Steckverbindung (19).

Je nach den Platzverhältnissen im Anbauraum des Fahrzeuges können Abwandlungen der bisher beschriebenen Bauform besonders vorteilhaft sein. Soll beispielsweise der Raum hinter der Fahrpedalplatte frei bleiben, so kann eine "hängende" Ausführungsform des Gehäuses vorgesehen werden, bei welcher die Kraftübertragung von der Fahrpedalplatte auf den Hebel über ein Betätigungsgestänge (20) erfolgt, welches an eine aus dem Gehäuse herausragende Verlängerung der mit dem Hebel verbundenen Welle angelenkt ist (Figur 5, Ansicht aus der Sicht des Fahrers). Eine besonders schmale Bauform der erfindungsgemäßen Fahrpedaleinrichtung kann dadurch erreicht werden, daß das Betätigungsgestänge (20a) über eine Aussparung im Gehäuse direkt mit einem mittleren Abschnitt der Welle verbunden ist (Figur 6).

Als weitere oder zusätzliche Variante können mehrere achsenparallel zueinander angeordnete Schraubendruckfedern innerhalb des Gehäuses statt nebeneinander auch übereinander angeordnet werden, wodurch die Bauform des Gehäuses länger aber dafür schmaler ausfällt. Auch eine Anordnung von verschieden dimensionierten Schraubendruckfedern koaxial ineinander ist möglich.

Bezüglich der Sensoren können, falls gewünscht, auch zusätzliche Endschalter vorgesehen werden. Weiterhin erscheint es für Fahrzeuge mit automatischem Getriebe sinnvoll ein Kick-down-Element (21) hinzuzufügen, so daß der Fahrer anhand der Kraftcharakteristik des Fahrpedals das Erreichen der Kick-down-Stellung der Fahrpedalplatte erkennen kann.

Hierzu ist es vorteilhaft, wenn das Gerätegehäuse (2) der Fahrpedaleinrichtung eine geeignete Einschubvorrichtung zur Aufnahme des Kick-Down-Elementes (21) aufweist.

Die aufgezeigten konstruktiven Varianten und Erweiterungen sind hier nur beispielhaft für verschiedene Möglichkeiten zur Ausbildung einer erfindungsgemäßen Fahrpedaleinrichtung genannt.

### Bezugszeichenliste

### Fahrpedaleinrichtung

- 1: Fahrpedalplatte
- 2: Gehäuse
- 3: Gelenk
- 4: Betätigungsstange
- 5: Kammer (im Gehäuse 2)
- 6: Hebel
- 7: Welle
- 8: Faltenbalg
- 9: Ausnehmung (in Hebel 6)
- 9a: abgeschrägte Innenfläche (der Ausnehmung 9)
- 10: Reibelement
- 10a: keilförmige Außenfläche
- 11: Schraubendruckfeder (n)
- 12: Reibfläche
- 13: Platte
- 14: Schleifer
- 15: Widerstandsträgerplatte
- 16: Magnet
- 17: magnetempfindlicher Sensor
- 18: Sensorgehäuse
- 19: Steckverbinder
- 20, 20a: Betätigungsgestänge
- 21: Kick-Down-Element

## Patentansprüche

1. Fahrpedaleinrichtung zum Einstellen der Fahrgeschwindigkeit eines Fahrzeuges, mit einer Fahrpedalplatte (1), mit mindestens einer Feder (11), die eine Rückstellkraft auf die Fahrpedalplatte (1) ausübt, mit zumindest einem Drehsensor (13, 14, 15 bzw. 16, 17) der ein von der Betätigung der Fahrpedalplatte (1) abhängiges Signal erzeugt, wobei der Drehsensor die Positionierung eines drehbaren Elementes (13, 14 bzw. 16) bestimmt und einer Einrichtung zur Erzeugung einer Krafthysterese (10,11,12)bei Betätigung der Fahrpedalplatte (1), dadurch gekennzeichnet, daß die Feder (11) als Schraubendruckfeder ausgebildet ist, daß zur Erzeugung der Krafthysterese ein Reibelement (10) vorgesehen ist, das durch die Schraubendruckfeder (11) beaufschlagt ist, daß ein drehbar gelagerter Hebel (6) vorgesehen ist, der die Betätigungswelle (7) des Drehsensors antreibt, daß der Hebel (6) eine Ausnehmung (9) aufweist, die eine abgeschrägte Innenfläche (9a) besitzt, an der eine keilförmige Außenfläche (10a) des Reibelements (10) verschieblich anliegt, wobei die der keilförmigen Außenfläche (10a) gegenüberliegende Außenfläche des Reibelements (10) an einer auf einer Gehäusewandung aufgebrachten Reibfläche (12) anliegt.

2. Fahrpedaleinrichtung nach Anspruch 1, dadurch gekennzeichnet, daß zur Erzeugung der Rückstellkraft mehrere Schraubendruckfedern vorgesehen sind.

3. Fahrpedaleinrichtung nach Anspruch 1, dadurch gekennzeichnet, daß das Gehäuse der Fahrpedaleinrichtung einen Steckverbinder (19) aufweist.

4. Fahrpedaleinrichtung nach Anspruch 1, dadurch gekennzeichnet, daß der Drehsensor als mehrbahniges Potentiometer (13, 14, 15) ausgebildet ist.

5. Fahrpedaleinrichtung nach Anspruch 1, dadurch gekennzeichnet, daß der Drehsensor als berührungsloser Drehsensor (16, 17) ausgebildet ist.

6. Fahrpedaleinrichtung nach Anspruch 1, dadurch gekennzeichnet, daß der Drehsensor ein magnetoresistiver Drehsensor ist.

7. Fahrpedaleinrichtung nach Anspruch 1, dadurch gekennzeichnet, daß die gesamte Fahrpedaleinrichtung eine Baueinheit bildet.

8. Fahrpedaleinrichtung nach Anspruch 1, dadurch gekennzeichnet, daß das Gerätegehäuse (2) der Fahrpedaleinrichtung im Inneren eine Einschubeinrichtung zur Aufnahme eines Kick-Down-Elementes (21) aufweist.

## Claims

1. Accelerator pedal device for adjusting the driving speed of a vehicle, comprising an accelerator plate (1), at least one spring (11) which exerts a resetting force on the accelerator plate (1), and at least one rotary sensor (13, 14, 15, and 16, 17, respectively) which generates a signal dependent on the actuation of the accelerator plate (1), the rotary sensor determining the positioning of a rotatable element (13, 14 and 16, respectively) and of a device for generating a force hysteresis (10, 11, 12) when the accelerator plate (1) is actuated, characterised in that the spring (11) is in the form of a helical compression spring, that for generating the force hysteresis there is provided a friction element (10) which is acted upon by the helical compression spring (11), that there is provided a rotary-mounted lever (6) which drives the actuating shaft (7) of the rotary sensor, and that the lever (6) features a recess (9) incorporating a bevelled inner surface (9a) against which a cuneiform outer surface (10a) of the friction element (10) rests in displaceable manner, the outer surface of the friction element (10) opposite the cuneiform outer surface (10a) resting against a friction surface (12) mounted on one casing wall.

2. Accelerator pedal device according to claim 1, characterised in that a plurality of helical compression springs are provided for generating the resetting force.

3. Accelerator pedal device according to claim 1, characterised in that the casing of the accelerator pedal device features a plug-in connector (19).

4. Accelerator pedal device according to claim 1, characterised in that the rotary sensor is in the form of a multi-channel potentiometer (13, 14, 15).

5. Accelerator pedal device according to claim 1, characterised in that the rotary sensor is in the form of a non-contact rotary sensor (16, 17).

6. Accelerator pedal device according to claim 1, characterised in that the rotary sensor is a magnetoresistive rotary sensor.

7. Accelerator pedal device according to claim 1, characterised in that the entire accelerator pedal device constitutes a modular unit.

8. Accelerator pedal device according to claim 1, characterised in that the equipment casing (2) of the accelerator pedal device has inside it a plug-in device for accommodating a kick-down element (21).

## Revendications

1. Dispositif de pédale d'accélérateur pour modifier la vitesse de marche d'un véhicule, comportant une plaque (1) de pédale d'accélérateur, comportant au moins un ressort (11) qui exerce une force de rappel sur la plaque (1) de pédale d'accélérateur, comportant au moins un détecteur de pivotement (13, 14, 15 ou 16, 17) qui produit un signal fonction de la manoeuvre de la plaque (1) de pédale d'accélérateur, le détecteur de pivotement déterminant la position d'un élément pivotant (13, 14 ou 16), et comportant aussi un dispositif pour produire une hystérésis (10, 11, 12) de la force exercée lors de la manoeuvre de la plaque (1) de la pédale d'accélérateur, caractérisé par le fait que le ressort (11) est conçu sous forme de ressort de compression hélicoïdal, que, pour produire l'hystérésis de la force exercée, est prévu un élément de friction (10) qui est contraint par le ressort de compression hélicoïdal (11), qu'est prévu un levier (6) qui est porté avec liberté de pivotement et qui entraîne l'arbre de manoeuvre (7) du détecteur de pivotement, que le levier (6) présente un évidement (9) qui possède une surface intérieure chanfreinée (9a) contre laquelle s'appuie, avec liberté de coulisser, une surface extérieure en forme de coin (10a) de l'élément de friction (10), la surface extérieure de l'élément de friction (10) située en face de la surface extérieure en forme de coin (10a) s'appuyant contre une surface de friction (12) appliquée sur une paroi du carter.

2. Dispositif de pédale d'accélérateur selon la revendication 1, caractérisé par le fait que pour produire la force de rappel sont prévus plusieurs ressorts de compression hélicoïdaux.

3. Dispositif de pédale d'accélérateur selon la revendication 1, caractérisé par le fait que le carter du dispositif de pédale d'accélérateur présente un connecteur enfichable (19).

4. Dispositif de pédale d'accélérateur selon la revendication 1, caractérisé par le fait que le détecteur de pivotement est conçu sous forme d'un potentiomètre à plusieurs voies (13, 14, 15).

5. Dispositif de pédale d'accélérateur selon la revendication 1, caractérisé par le fait que le détecteur de pivotement est conçu sous forme d'un détecteur de pivotement sans contact (16, 17).

6. Dispositif de pédale d'accélérateur selon la revendication 1, caractérisé par le fait que le détecteur de pivotement est un détecteur de pivotement magnéto-résistant.

7. Dispositif de pédale d'accélérateur selon la revendication 1, caractérisé par le fait que l'ensemble du dispositif de pédale d'accélérateur forme un ensemble.

8. Dispositif de pédale d'accélérateur selon la revendication 1, caractérisé par le fait que le carter (2) du dispositif de pédale d'accélérateur présente à l'intérieur un dispositif d'enfilage pour recevoir un élément Kick-Down/de postaccélération (21).
